# EUROPÄISCHE PATENTSCHRIFT

(11) **EP 1 097 061 B1**
(45) Veröffentlichungstag und Bekanntmachung des Hinweises auf die Patenterteilung: **24.09.2003**
(21) Anmeldenummer: 00934902.8
(22) Anmeldetag: 13.04.2000
(51) Int. Cl.: B60R 21/00

(54) **VERFAHREN ZUR BILDUNG EINES AUSLÖSEKRITERIUMS FÜR RÜCKHALTEMITTEL**
METHOD FOR ESTABLISHING A RELEASE CRITERION FOR RESTRAINING MEANS
PROCEDE POUR L'ETABLISSEMENT D'UN CRITERE DE DECLENCHEMENT DE MOYENS DE RETENUE

(30) Priorität: 20.04.1999 DE 19917710
(43) Veröffentlichungstag der Anmeldung: 09.05.2001
(73) Patentinhaber: ROBERT BOSCH GMBH, 70442 Stuttgart (DE)
(72) Erfinder: ROELLEKE, Michael, D-71229 Leonberg-Hoefingen (DE)
(86) Internationale Anmeldenummer: DE0001144
(87) Internationale Veröffentlichungsnummer: WO00063045

(56) Entgegenhaltungen:
- EP-A- 0 727 336
- EP-B- 0 458 796
- DE-A- 3 621 580
- DE-A- 19 713 087
- US-A- 5 801 619

## Beschreibung

### Stand der Technik

Die vorliegende Erfindung betrifft ein Verfahren zur Bildung eines Auslösekriteriums für Rückhaltemittel in einem Fahrzeug, wobei die Beschleunigung des Fahrzeugs in mindestens einer Richtung gemessen wird, die gemessene Beschleunigung integriert wird, die integrierte Beschleunigung mit einer Schwelle verglichen wird, welche bei niedrigen Beschleunigungen einen hohen Wert und bei hohen Beschleunigungen einen niedrigen Wert annimmt, und ein Überschreiten der Schwelle durch die integrierte Beschleunigung als Auslösekriterium verwendet wird.

Ein derartiges Verfahren zur Bildung eines Auslösekriteriums für Rückhaltemittel ist aus der EP 0 458 796 B2 bekannt. Bei dem in dieser Druckschrift beschriebenen Auslösealgorithmus hängt die Lage der Schwelle von der gemessenen Beschleunigung ab. Durch geeignete Wahl der Schwelle lassen sich Auslösefälle von Nichtauslösefällen unterscheiden. Es soll nämlich die Auslösung von Rückhaltemitteln (Airbags, Gurtstraffer) dann verhindert werden, wenn das Fahrzeug nur einen leichten Crash erfährt, oder z.B. Bahnschwellen oder Bordsteinkanten überfährt, wobei die Fahrzeuginsassen keiner Verletzungsgefahr ausgesetzt sind. Dagegen soll bei harten Crashes, durch welche die Fahrzeuginsassen in jedem Fall verletzungsgefährdet sind, eine Auslösung der Rückhaltemittel uneingeschränkt gewährleistet werden. Da zwischen Crashes, welche eine Auslösung der Rückhaltemittel erfordern, und Crashes, bei denen keine Auslösung erfolgen soll, sehr enge Grenzen liegen, kann es durchaus passieren, daß eine falsche Entscheidung bezüglich Auslösung bzw. Nichtauslösung der Rückhaltemittel getroffen wird.

Der Erfindung liegt daher die Aufgabe zugrunde, ein Verfahren der eingangs genannten Art anzugeben, das mit möglichst hoher Zuverlässigkeit ein Auslösekriterium bildet und Nichtauslösefälle deutlich von Auslösefällen unterscheidet.

### Vorteile der Erfindung

Die genannte Aufgabe wird mit den Merkmalen des Anspruchs 1 dadurch gelöst, daß die gemessene Beschleunigung einer Tiefpaßfilterung unterzogen wird, daß die Auslöseschwelle in Abhängigkeit von dem gefilterten Beschleunigungssignal gebildet wird, daß, sobald ein Beschleunigungssignal gemessen wird, dieses in einem ersten Zeitabschnitt auf charakteristische Merkmale untersucht wird, die auf ein Crashereignis hindeuten, bei dem keine Auslösung der Rückhaltemittel erfolgen soll, und daß bei einem solchen erkannten Nichtauslösefall die Grenzfrequenz des Tiefpaßfilters für einen vorgegebenen Zeitabschnitt verringert wird. Dadurch, daß ein gemessenes Beschleunigungssignal zu Beginn daraufhin analysiert wird, ob Merkmale für einen Nichtauslösecrash vorliegen, und dementsprechend die Auslöseschwelle beeinflußt wird, entsteht ein viel genaueres Auslösekriterium, das deutlich zwischen Auslöse- und Nichtauslösefällen unterscheidet.

Würde eventuell fälschlicherweise ein Nichtauslösecrash erkannt, in Wirklichkeit aber ein harter Crash folgen, der ein unbedingtes Auslösen der Rückhaltemittel erfordert, so würden die Crashsignale durch die kurzzeitige Verringerung der Grenzfrequenz des Tiefpassfilters nur unwesentlich beeinflußt.

Vorteilhafte Weiterbildungen der Erfindung gehen aus den Unteransprüchen hervor.

So ist es zweckmäßig, die Integration der gemessenen Beschleunigung erst dann zu starten, wenn das Beschleunigungssignal einen vorgegebenen Signalpegel überschreitet. Somit werden sehr geringe Beschleunigungen des Fahrzeugs, die sich unterhalb einer Rauschschwelle bewegen, für die Bildung des Auslösekriteriums erst gar nicht berücksichtigt.

Das Tiefpaßfilter kann vorzugsweise ein IIR (Infinite Impuls Response) oder ein FIR (Finite Impuls Response) Filter sein, dessen Parameter bei einem erkannten Nichtauslösefall so verändert werden, daß sich die Filtergrenzfrequenz verringert.

Vorteilhafterweise wird für die Erkennung von Nichtauslösefällen das gemessene Beschleunigungssignal in dem ersten Zeitabschnitt über mehrere aufeinanderfolgende kurze Zeitfenster integriert, dann das so integrierte Beschleunigungssignal einer Schwellwertentscheidung unterzogen und für einen Nichtauslösefall entschieden, wenn das integrierte Beschleunigungssignal zu Beginn wegen einer Verzögerung des Fahrzeugs eine untere Schwelle unterschreitet und anschließend wegen elastischer Schwingungen der Fahrzeugkarosserie eine obere Schwelle überschreitet.

### Zeichnung

Anhand mehrerer in der Zeichnung dargestellter Ausführungsbeispiele wird nachfolgend die Erfindung näher erläutert. Es zeigen:
Figur 1 ein Blockschaltbild, das die Herleitung eines Auslösekriteriums verdeutlicht,
Figuren 2a und 2b ein gemessenes Beschleunigungssignal und das Integral dieses Beschleunigungssignals,
Figur 3 die Abhängigkeit der Auslöseschwelle von der Beschleunigung,
Figuren 4a und 4b ein gemessenes Beschleunigungssignal und ein diesem zugeordneter Verlauf der Auslöseschwelle,
Figur 5 ein Ablaufdiagramm zur Erkennung von Nichtauslöse-Crashes,
Figuren 6a und 6b ein gemessenes Beschleunigungssignal und sein Verlauf nach einer Fensterintegration,
Figuren 7a und 7b ein gemessenes Beschleunigungssignal und dessen Verlauf nach einer Filterung.

### Beschreibung von Ausführungsbeispielen

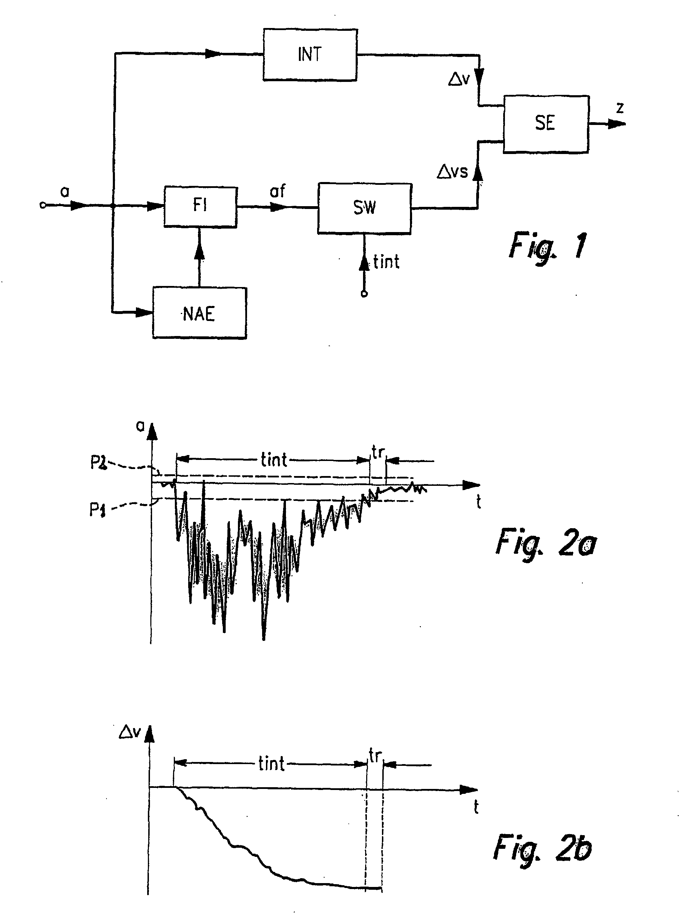

Wie dem Blockschaltbild in Figur 1 zu entnehmen ist, wird eine im Fahrzeug gemessene Beschleunigung a, vorzugsweise die Beschleunigung in Richtung seiner Längsachse, einem Integrator INT zugeführt. In der Figur 2a ist ein beispielhafter Verlauf einer gemessenen Beschleunigung a dargestellt. Die Integration der Beschleunigung a beginnt nicht sofort mit Auftreten des Beschleunigungssignals, sondern erst wenn das Beschleunigungssignal a einen gewissen Signalpegel erreicht hat. Dazu wird ein Pegelbereich durch zwei Schwellen P1 und P2 festgelegt, und solange sich das Beschleunigungssignal innerhalb dieses Pegelbereichs bewegt, wird die Integration nicht gestartet, da dieses Beschleunigungssignal für eine Auslösung von Rückhalterichtungen erheblich zu gering wäre. Wie in der Figur 2a angedeutet, beginnt die Integrationszeit tint, sobald das Beschleunigungssignal a die Schwelle P1 überschritten hat. Die Integration wird solange fortgesetzt, bis das Beschleunigungssignal a wieder in den Pegelbereich zwischen P1 und P2 für eine Zeitdauer tr abfällt. Das Ergebnis der Integration des Beschleunigungssignals a ist eine Geschwindigkeitsänderung Δv, wie in der Figur 2b dargestellt. Das Ausgangssignal Δv des Integrators INT steigt innerhalb der Integrationszeit tint von 0 bis auf einen Endwert am Ende der Integrationszeit tint an. Das aus der Integration INT hervorgehende Geschwindigkeitsänderungssignal Δv wird einer Schwellwertentscheidung SE zugeführt, in der das Signal Δv mit einer Auslöseschwelle Δvs verglichen wird. Auslösekriterium für Rückhalteeinrichtungen im Fahrzeug ist das Überschreiten der Auslöseschwelle Δvs durch das Geschwindigkeitsänderungssignals Δv. Bei einer Schwellwertüberschreitung erscheint dann am Ausgang des Schwellwertentscheiders SE das Auslösesignal z.

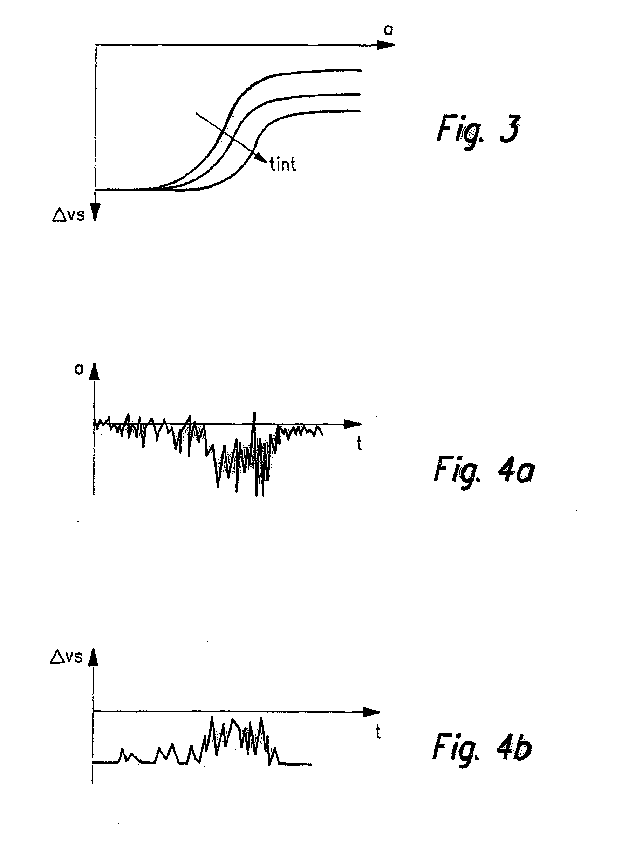

Desweiteren wird nun erläutert, wie die Auslöseschwelle Δvs ermittelt wird. Die Auslöseschwelle Δvs wird in einem Block SW gebildet. Wie die Figur 3 zeigt, besitzt die Auslöseschwelle Δvs einen von der Beschleunigung des Fahrzeugs abhängigen Verlauf. Und zwar besitzt die Auslöseschwelle Δvs einen hohen Wert bei niedriger Beschleunigung a und einen niedrigen Wert bei hoher Beschleunigung a. Damit ist gewährleistet, daß hohe Beschleunigungen in jedem Fall das Auslösekriterium erfüllen. Geringe Beschleunigungen sollen dagegen keinesfalls zu einer Überschreitung der Auslöseschwelle Δvs führen, was durch eine hohe Auslöseschwelle Δvs bei geringen Beschleunigungen a auch verhindert wird. Der genaue Verlauf der Auslöseschwelle Δvs wird aus einer Vielzahl von Crashversuchen empirisch ermittelt und entsprechend optimiert. Die Lage der Auslöseschwelle Δvs ist, wie der Figur 3 zu entnehmen ist, ebenfalls von der Integrationszeit tint abhängig. Je größer die Integrationszeit tint der Beschleunigung a ist, desto geringer ist der Abfall der Auslöseschwelle Δvs mit zunehmender Beschleunigung a von einem hohen auf einen niedrigen Wert. An dem in den Figuren 4a und 4b dargestellten Beispiel wird verdeutlicht, wie bei einer gemessenen Beschleunigung a (Figur 4a) eine dieser zugeordnete Auslöseschwelle Δvs (Figur 4b) über die Zeit t verläuft. Man erkennt in Figur 4b, daß die Auslöseschwelle Δvs bei kleinen Beschleunigungen a einen hohen Wert und bei hohen Beschleunigungen a einen geringen Wert annimmt.

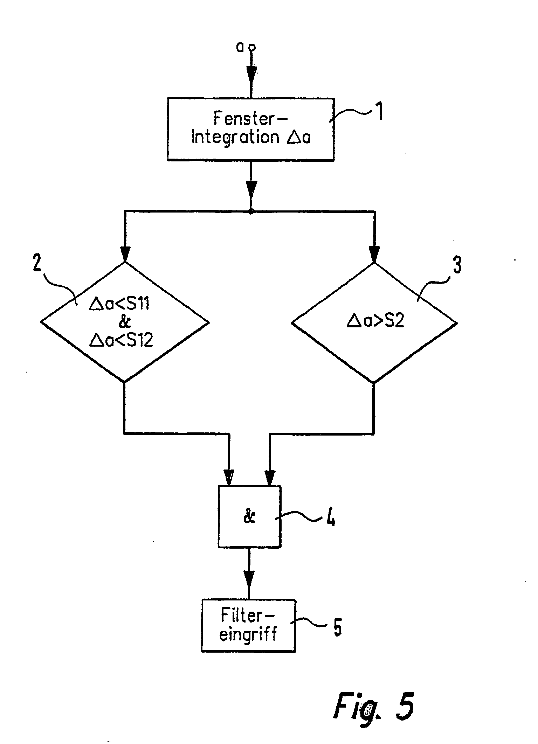

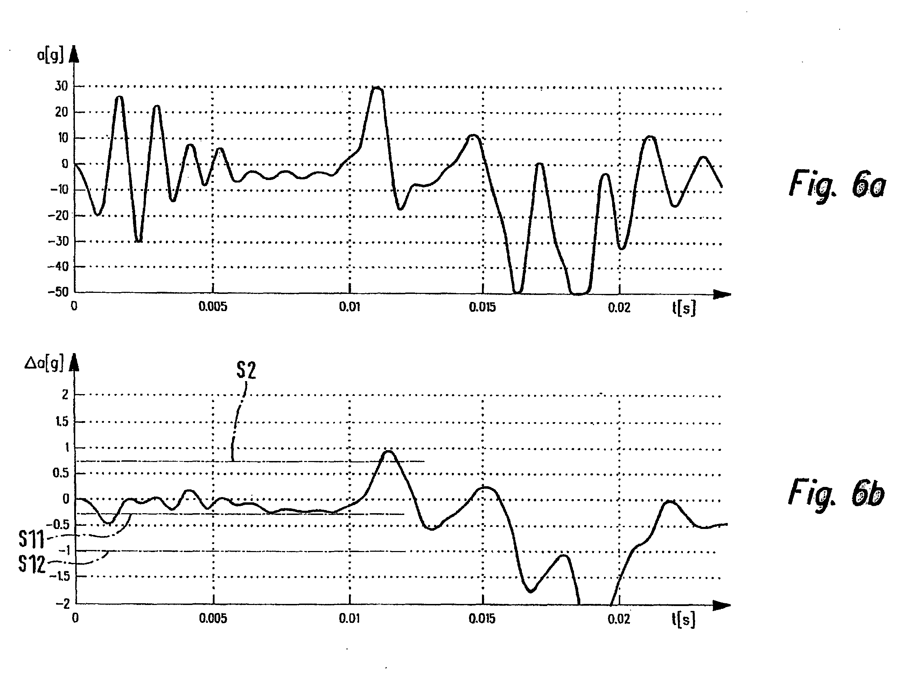

Der Block NAE in Figur 1 führt eine Analyse des Beschleunigungssignals a in einem ca. 10 bis 15 ms dauernden ersten Zeitabschnitt seit Beginn des Beschleunigungssignals a durch. In diesem ersten Zeitabschnitt wird das Beschleunigungssignal a auf charakteristische Merkmale hin analysiert, ob diese auf einen Nichtauslöse-Crash hinweisen. In der Figur 5 ist ein Flußdiagramm dargestellt, welches die Vorgehensweise bei der Analyse des Beschleunigungssignals a verdeutlicht. In einem ersten Schritt 1 wird das gemessene Beschleunigungssignal a einer Fenster-Integration unterzogen. Das bedeutet, daß das gemessene Beschleunigungssignal a in mehrere aufeinanderfolgende Zeitabschnitte aufgeteilt und in jedem Zeitabschnitt integriert wird. In der Praxis wird dazu ein Zeitfenster von ca. 1,5 ms Dauer gebildet, das über den erwähnten ersten Zeitabschnitt sukzessiv verschoben wird, und in jeder neuen Lage des Zeitfensters findet eine Integration der vom Zeitfenster erfaßten Meßwerte der Beschleunigung a statt. An dem in den Figuren 6a und 6b dargestellten Beispiel wird dieser Vorgang verdeutlicht. In der Figur 6a ist ein beispielhafter Verlauf eines Beschleunigungssignals a dargestellt. Die an der Ordinatenachse aufgetragenen Werte beziehen sich auf Vielfache der Erdbeschleunigung g. Die Figur 6b zeigt das Beschleunigungssingal Δa nach der beschriebenen Fensterintegration des gemessenen Beschleunigungssignals a. Durch diese Fensterintegration heben sich markante Signalpegel des gemessenen Beschleunigungssignals a deutlicher hervor. Es zeigt sich, daß bei Nichtauslösecrashes zu Beginn des Beschleunigungssignals eine stärkere Verzögerung entsteht und anschließend aufgrund von elastischen Schwingungen der Fahrzeugkarosserie einige höhere Beschleunigungspegel auftreten. Zu diesen charakteristischen Nichtauslösecrashes gehören z.B. langsame Crashes, die bei einer Fahrzeuggeschwindigkeit von < 20 km/h ablaufen oder Kieshaufeneinfahrten oder Bordsteinüberfahrten oder Bahnschwellenüberfahrten und dergleichen. Langsame Crashes bei einer Fahrzeuggeschwindigkeit unterhalb von 20 km/h werden oft durch die Front-End-Struktur der Karosserie elastisch abgefangen, ohne daß es zu starken Bruchbildungen kommt. Deshalb treten am Anfang ein oder mehrere starke Verzögerungsspitzen auf, und diesen folgen sofort Beschleunigungsanteile, die das elastische Verhalten der Fahrzeugkarosserie wiedergeben.

Die besagten Signalpegel des fensterintegrierten Beschleunigungssignals Δa werden durch Schwellwertentscheidungen in den Schritten 2 und 3 detektiert. In Verfahrenschritt 2 wird das fensterintegrierte Beschleunigungssignal Δa mit einer ersten unteren Schwelle S11 verglichen, und falls der Pegel von Δa unter diese Schwelle S11 abfällt, deutet das auf die stärkere Verzögerung des Fahrzeugs zu Beginn des Crashes hin. Das Signal Δa muß zusätzlich mit einer zweiten unteren Schwelle S12 verglichen werden, die noch unterhalb der ersten unteren Schwelle S11 liegt. Bei Auslöse-Crashes entstehen nämlich so starke Verzögerungen, die das Signal Δa unter die unterste Schwelle S12 absinken lassen. Bei Nichtauslöse-Crashes überschreitet das Signal Δa allenfalls die erste untere Schwelle S11 aber nicht die zweite untere Schwelle S12. Insofern erreicht man durch den Vergleich des Signals Δa mit den beiden unteren Schwellen S11 und S12 eine Unterscheidung zwischen Nichtauslöse- und Auslöse-Crashes. Überschreitet, wie in Verfahrensschritt 3 angedeutet, das fensterintegrierte Beschleunigungssignal Δa eine obere Schwelle S2, hat man es mit dem typischen elastischen Nachschwingverhalten der Fahrzeugkarosserie zu tun. Ergibt die UND-Verknüpfung in Verfahrensschritt 4 der beiden Schwellwertentscheidungen, daß sowohl zu Beginn des Beschleunigungssignals eine Verzögerungsspitze und anschließend eine Beschleunigungsspitze auftritt, so kann im Verfahrensschritt 5 der anschließend beschriebene Filtereingriff vorgenommen werden. Abweichend von dem beschriebenen Verfahren kann die Analyse des Beschleunigungssignals a auf Nichtauslöse-Crashes auch mit anderen bekannten Methoden, z.B. einer Frequenzanalyse, durchgeführt werden.

Das bereits angesprochene Filter FI führt eine Tiefpaßfilterung des gemessenen Beschleunigungssingals a durch. Von dem gefilterten Beschleunigungssignal af wird im Schaltblock SW, wie oben beschrieben, die Auslöseschwelle Δvs abgeleitet. Die Grenzfrequenz des Tiefpaßfilters FI ist so eingestellt, daß sich für Auslöse-Crashes ein Filtersignal af ergibt, aus dem im Schaltblock SW eine Auslöseschwelle Δvs gebildet wird, die eine sichere Auslöseentscheidung zur Folge hat. Wird nun im Schaltblock NAE ein Nichtauslöse-Crash erkannt, so wird die Empfindlichkeit des Tiefpaßfilters FI, d.h. die Grenzfrequenz dieses Filters, für einen bestimmten Zeitabschnitt verringert, so daß das dabei entstehende Ausgangssignal af des Filters FI im Schaltblock SW die Bildung einer veränderten Auslösekennlinie hervorruft, welche eine Auslösung der Rückhaltemittel sicher verhindert.

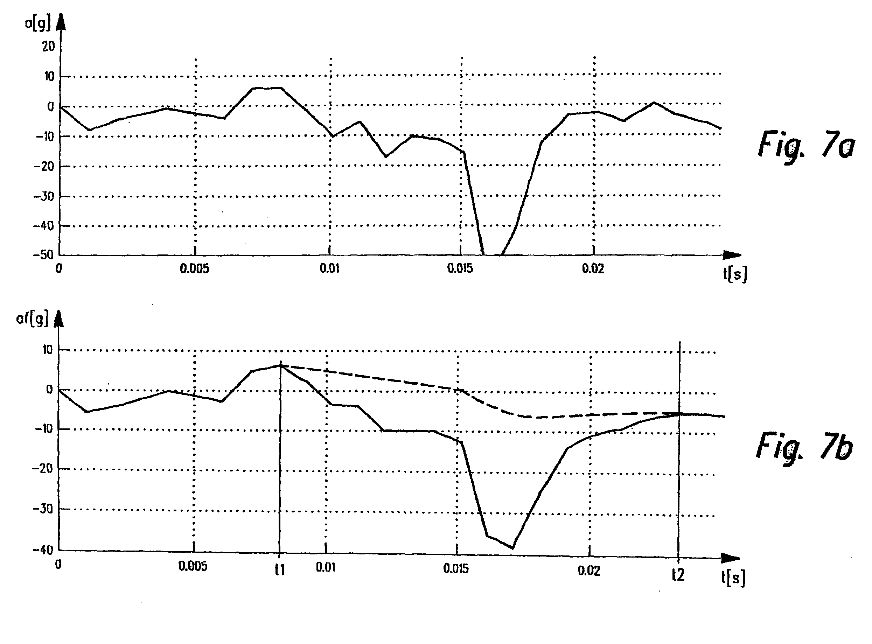

In der Figur 7a ist ein beispielhafter Verlauf einer gemessenen Beschleunigung a dargestellt. Darunter in Figur 7b ist der tiefpaßgefilterte Verlauf af des gemessenen Beschleunigungssignals a zu sehen. Dabei ist die durchgezogene Linie das tiefpaßgefilterte Beschleunigungssignal af bei unveränderter Grenzfrequenz. Wird nun zum Zeitpunkt t1 ein Nichtauslöse-Crash erkannt, so wird die Grenzfrequenz des Tiefpaßfilters FI verringert, was sich in dem strichlierten Verlauf des Filterausgangssignals af niederschlägt. Die Grenzfrequenzverschiebung wird bis zu einer Zeit t2, die etwa 15 ms auf t1 folgt, aufrechterhalten. Danach wird die Grenzfrequenz des Tiefpaßfilters FI wieder in die ursprüngliche Lage zurückversetzt, damit dann auftretende Auslöse-Crashes zuverlässig detektiert werden können.

Vorzugsweise ist das Tiefpaßfilter FI ein IIR-Filter (Infinite Impulse Response) oder ein FIR-Filter (Finite Impulse Response), dessen Filterkoeffizienten für die Veränderung der Grenzfrequenz bei einem Nichtauslöse-Crash entsprechend verändert werden.

## Patentansprüche

1. Verfahren zur Bildung eines Auslösekriteriums für Rückhaltemittel in einem Fahrzeug, wobei die Beschleunigung (a) des Fahrzeugs in mindestens einer Richtung gemessen wird, die gemessene Beschleunigung (a) integriert (INT) wird, die integrierte Beschleunigung (Δv) mit einer Auslöseschwelle (Δvs) verglichen wird, welche bei niedrigen Beschleunigungen einen hohen Wert und bei hohen Beschleunigungen einen niedrigen Wert annimmt, und ein Überschreiten der Auslöseschwelle (Δvs) durch die integrierte Beschleunigung (Δv) als Auslösekriterium verwendet wird, **dadurch gekennzeichnet, daß** die gemessene Beschleunigung (a) einer Tiefpaßfilterung (FI) unterzogen wird, daß die Auslöseschwelle (Δvs) in Abhängigkeit von dem tiefpaßgefilterten Beschleunigungssignal (af) gebildet wird, daß, sobald ein Beschleunigungssignal (a) gemessen wird, dieses in einem ersten Zeitabschnitt auf charakteristische Merkmale untersucht wird, die auf ein Crashereignis hindeuten, bei dem keine Auslösung der Rückhaltemittel erfolgen soll, und daß bei einem solchen erkannten Nichtauslöse-Fall die Grenzfrequenz des Tiefpaßfilters (FI) für einen vorgegebenen Zeitabschnitt verringert wird.

2. Verfahren nach Anspruch 1, **dadurch gekennzeichnet, daß** die Integration der gemessenen Beschleunigung (a) erst dann gestartet wird, wenn das Beschleunigungssignal (a) einen vorgegebenen Signalpegel (P1, P2) überschreitet.

3. Verfahren nach Anspruch 1, **dadurch gekennzeichnet, daß** das Tiefpaßfilter (FI) ein Infinite Impulse Response Filter ist, dessen Parameter bei einem erkannten Nichtauslösefall so verändert werden, daß sich die Filter-Grenzfrequenz verringert.

4. Verfahren nach Anspruch 1, **dadurch gekennzeichnet, daß** das Tiefpaßfilter (FI) ein Finite Impulse Response Filter ist, dessen Parameter bei einem erkannten Nichtauslösefall so verändert werden, daß sich die Filter-Grenzfrequenz verringert.

5. Verfahren nach Anspruch 1, **dadurch gekennzeichnet, daß** für die Erkennung von Nichtauslösefällen das gemessene Beschleunigungssignal (a) in dem ersten Zeitabschnitt über mehrere aufeinanderfolgende kurze Zeitfenster integriert wird (1) daß das so integrierte Beschleunigungssignal (Δa) einer Schwellwertentscheidung (2, 3) unterzogen wird und daß für einen Nichtauslösefall entschieden wird, wenn das integrierte Beschleunigungssignal (Δa) zu Beginn wegen einer Verzögerung des Fahrzeugs eine untere Schwelle (S11) unterschreitet und anschließend wegen elastischer Schwingungen der Fahrzeugkarosserie eine obere Schwelle (S2) überschreitet.

6. Verfahren nach Anspruch 5, **dadurch gekennzeichnet, daß** das integrierte Beschleunigungssignal (Δa) mit einer weiteren unteren Schwelle (S12) verglichen wird, die noch unterhalb der anderen unteren Schwelle (S11) liegt und nur bei Auslöse-Crashes unterschritten wird, und daß nur dann für einen Nichtauslösefall entschieden wird, wenn das integrierte Beschleunigungssignal (Δa) diese weitere untere Schwelle (312) nicht unterschreitet.

## Claims

1. Method for forming a triggering criterion for restraint means in a vehicle, the acceleration (a) of the vehicle being measured in at least one direction, the measured acceleration (a) being integrated (INT), the integrated acceleration (Δv) being compared with a triggering. threshold (Δvs), which assumes a high value at low accelerations and a low value at high accelerations, and the fact that the triggering criterion (Δvs) is exceeded by the integrated acceleration (Δv) being used as a triggering criterion, **characterized in that** the measured acceleration (a) is subjected to low-pass filtering (FI), **in that** the triggering threshold (Δvs) is formed as a function of the low-pass filtered acceleration signal (af), **in that** as soon as an acceleration signal (a) is measured it is examined, in a first time period, for characteristic features which indicate a crash event during which the restraint means are not to be triggered, and **in that** when such a non-triggering case is detected, the limiting frequency of the low-pass filter (FI) is reduced for a predefined time period.

2. Method according to Claim 1, **characterized in that** the integration of the measured acceleration (a) is not started until the acceleration signal (a) exceeds a predefined signal level (P1, P2).

3. Method according to Claim 1, **characterized in that** the low-pass filter (FI) is an infinite impulse response filter whose parameters are changed when a non-triggering case is detected, in such a way **in that** the filter limiting frequency is reduced.

4. Method according to Claim 1, **characterized in that** the low-pass filter (FI) is a finite impulse response filter whose parameters are changed when a non-triggering case is detected, in such a way that the filter limiting frequency is reduced.

5. Method according to Claim 1, **characterized in that**, in order to detect non-triggering cases, the measured acceleration signal (a) is integrated (1) in the first time period over a plurality of short successive time windows, **in that** the acceleration signal (Δa) which is integrated in this way is subjected to a threshold value decision (2, 3), and **in that** a non-triggering case is determined if the integrated acceleration signal (Δa) initially drops below a lower threshold (S11) owing to a deceleration of the vehicle and subsequently exceeds an upper threshold (S2) owing to elastic oscillations of the vehicle body.

6. Method according to Claim 5, **characterized in that** the integrated acceleration signal (Δa) is compared with a further lower threshold (S12) which still lies below the other lower threshold (S1 and below which the signal drops only in the case of a triggering crash, and **in that** a non-triggering case is determined only if the integrated acceleration signal (Δa) does not drop below this further lower threshold (S12).

## Revendications

1. Procédé pour l'établissement d'un critère de déclenchement de moyens de retenue dans un véhicule, dans lequel on mesure l'accélération (a) du véhicule dans au moins une direction, on intègre (INT l'accélération mesurée (a), on compare l'accélération intégrée (Δv) avec un seuil de déclenchement (Δvs), qui prend une valeur élevée pour de faibles accélérations et une valeur faible pour des accélérations élevées, et on utilise comme critère de déclenchement un dépassement du seuil de déclenchement (Δvs) par l'accélération intégrée (Δv),
**caractérisé en ce que**
l'on soumet l'accélération mesurée (a) à un filtrage passe-bas (FI), **en ce que** l'on forme le seuil de déclenchement (Δvs) en fonction du signal d'accélération filtré au filtre passe-bas (af), **en ce que**, dès que l'on mesure un signal d'accélération (a), on examine celui-ci pendant un premier laps de temps sous l'angle de grandeurs caractéristiques qui révèlent une collision, dans laquelle il ne doit pas se produire de déclenchement des moyens de retenue, et **en ce que**, dans un tel cas identifié de non-déclenchement, on abaisse la fréquence limite du filtre passe-bas (FI) pour un laps de temps prédéterminé.

2. Procédé selon la revendication 1,
**caractérisé en ce que**
l'on ne commence l'intégration de l'accélération mesurée (a) que lorsque le signal d'accélération (a) dépasse un niveau de signal prédéterminé (P1, P2).

3. Procédé selon la revendication 1,
**caractérisé en ce que**
le filtre passe-bas (FI) est un filtre à réponse d'impulsion infinie, dont les paramètres sont modifiés lors d'un cas identifié de non-déclenchement, de telle façon que la fréquence limite du filtre diminue.

4. Procédé selon la revendication 1,
**caractérisé en ce que**
le filtre passe-bas (FI) est un filtre à réponse d'impulsion finie, dont les paramètres sont modifiés lors d'un cas identifié de non-déclenchement, de telle façon que la fréquence limite du filtre diminue.

5. Procédé selon la revendication 1,
**caractérisé en ce que**
pour l'identification de cas de non-déclenchement, on intègre le signal d'accélération mesuré (a) dans le premier laps de temps sur plusieurs courtes fenêtres de temps successives (1), **en ce que** l'on soumet le signal d'accélération ainsi intégré (Δa) à une décision de valeur de seuil (2,3) et **en ce que** l'on décide d'un cas de non-déclenchement lorsque le signal d'accélération intégré (Δa) descend au début en dessous d'un seuil inférieur (Si 1) à cause d'un ralentissement du véhicule et dépasse ensuite un seuil supérieur (S2) à cause de vibrations élastiques de la carrosserie du véhicule.

6. Procédé selon la revendication 5,
**caractérisé en ce que**
l'on compare le signal d'accélération intégré (Δa) avec un autre seuil inférieur (S 12), qui est situé encore en dessous de l'autre seuil inférieur (S11) et sous lequel on ne descend qu'en cas de collision avec déclenchement. et **en ce que** l'on ne décide d'un cas de non-déclenchement que lorsque le signal d'accélération intégré (Δa) ne descend pas en dessous de cet autre seuil inférieur (S12).
